# EUROPEAN PATENT APPLICATION

(11) **EP 4 586 480 A1**
(43) Date of publication of application: **16.07.2025**
(21) Application number: 24150819.1
(22) Date of filing: 09.01.2024
(51) Int. Cl.: H02M 1/32, H02M 1/34, H02M 7/162, H02M 7/17, H02M 7/493, H02M 7/521

(54) **COMBINED SNUBBER CONTROL FOR REDUNDANT THYRISTOR CONVERTERS**

(71) Applicant: ABB SCHWEIZ AG, 5400 Baden (CH)
(72) Inventor: MEIER, Georg, 5300 Turgi (CH); KNAPP, Wolfgang, 5600 Lenzburg (CH)
(74) Representative: Zimmermann & Partner Patentanwälte mbB

(57) **Abstract**

A technique for a thyristor converter (100) for transferring power from an alternating current, AC, voltage input to a direct current, DC, voltage output, a method (600) for controlling the thyristor converter and a system (500) of thyristor converters is provided. The thyristor converter comprises a thyristor unit (10) that comprises a rectifier with at least two pulses, in particular with six pulses with thyristors, the thyristor unit comprising an input (12), a diode bridge (14) being coupled to the input of the thyristor unit, and a summing snubber unit (16). The summing snubber unit comprises a capacitor (18) being coupled via the diode bridge to the input of the thyristor unit, a resistor (20) being coupled to the capacitor in parallel, and a switching device (22) being coupled to the resistor in series. The thyristor converter further comprises a control unit (24), the control unit being configured to pulsingly activate the switching device in response to a control signal (27).

## Description

Aspects of the invention generally relate to the conversion of an AC voltage into DC voltage, or vice versa from a DC voltage to an AC voltage. Aspects of the invention particularly relate to redundant thyristor converters including one or more thyristor converter, each thyristor converter having a summing snubber. Aspects of the invention particularly relate to the control of a resistor of the summing snubbers.

### Technical background:

A system that comprise at least two thyristor converters coupled in parallel may be referred to as redundant thyristor converters. Redundant thyristor converters are a key component in the field of energy technology, for instance in high-voltage direct current transmissions, or excitation systems.

Switching events of thyristors of redundant thyristor converts may create voltage spikes on top of the regular voltage waveforms. Such voltage spikes may strain and damage the dielectric insulation of connecting devices or other parts of the thyristor converters, or devices connected thereto, such as windings of transformers or generators.

In order to reduce the magnitude of voltage spikes during switching events, snubber circuits are implemented within thyristor converters. Snubber circuits can be implemented across each thyristor of the thyristor converter in form of an in-series connection of a capacitor and resistor (RC element). Snubber circuits can also be implemented in combined form in form of a "summing snubber" at the AC input of a thyristor converter. Summing snubbers consists of a rectifier coupled to a single capacitor and resistor network. Compared to regular snubber circuits, summing snubbers circuits necessitate less parts and connection elements for set-up and maintenance.

According to the conventional technology, thyristor converter technology, summing snubbers are provided with fixed resistances. Such fixed resistances of summing snubbers can imply losses that are driven by a rectified input voltage (Pₗₒₛₛₑₛ = Ud²/R. For instance, in cases of idleness of one thyristor converter of the redundant thyristors, a current flows through the idle summing snubber due to the rectified input voltage that is permanently connected to each of the thyristor converters. In particular, an almost two-fold power loss is caused by the two resistors in parallel, while each of them must be designed for only one converter in a worst-case scenario, for instance when a failed thyristor converter is disconnected at all poles during operation. Also, fixed resistances of summing snubbers must be optimized for worst-case scenarios, thereby, under certain circumstances, causing unnecessarily high energy losses.

Thus, there is a need for an improved summing snubber suitable for thyristor converters. In particular, there is a need for an improved summing snubber at reduced thyristor turn-off losses and optimized losses in the snubber resistor.

### Summary of the invention

In view of the above, the invention as set out in the appended set of claims is provided.

According to an aspect, a thyristor converter for transferring power from an alternating current, AC, voltage input to a direct current, DC, voltage output, is described. The thyristor converter includes a thyristor unit having a rectifier with at least two pulses, in particular with six pulses, with thyristors. The thyristor unit has an input. The thyristor converter further includes a diode bridge being coupled to the input of the thyristor unit, and a summing snubber unit. The summing snubber unit has a capacitor being coupled via the diode bridge to the input of the thyristor unit, a resistor being coupled to the capacitor in parallel, and a switching device being coupled to the resistor in series. The thyristor converter also has a control unit, the control unit being configured to pulsingly activate the switching device in response to a control signal.

A rectifier with two pulses may be referred to as two-pulse rectifier. A rectifier with six pulses may be referred to as six-pulse rectifier. A six-pulse rectifier may also be referred to as three-phase full wave rectifier.

According to embodiments, the three-phases of AC voltage input may be connected to branches of the rectifier at the input of the thyristor unit of the thyristor converter. The six-pulse rectifier may have two branches. Each branch may have three thyristors. An input voltage at the input of the thyristor unit may be referred to U_{syn}.

The diode-bridge may be connected to the three-phases of the AC voltage input at the input of the thyristor unit. The diode-bridge may be connected in parallel to the thyristor unit. The diode-bridge may have the same number of pulses as the rectifier. The diode-bridge may provide a low-ohmic current path to absorb energy caused by the turn-off process of each individual thyristor. The circuit of the diode-bridge may correspond to the circuit of the rectifier, whereas the thyristors may be replaced with diodes. When the negative thyristor current may be terminated a high positive di/dt may be created. The fast raising current may not be able to flow back to the source having an inductive leakage reactance L, but may cause an overvoltage U=di/dt*L. By means of the diode-bridge, a charging current may flow into the capacitors of the summing snubber instead. An overvoltage may be avoided by the charging capability of the relatively big capacitor and the turn-off losses in the thyristor may be remarkably reduced compared to individual R-C snubbers connected in parallel to the thyristor.

The voltage across the capacitor of the summing snubber may be referred to as U_{c1}. The capacitor voltage U_{c1} may be measured locally. The summing snubber may be provided with additional series damping resistors and/or diodes. The summing snubber may also be referred to as "bucket circuit".

"Pulsingly", as used herein, may be understood as an activation of the switching device that may alternate between "ON" and "OFF" modes. Pulsingly may imply that "ON" and "OFF" modes are equally long, or, alternatively, that the "ON" mode may last longer than the "OFF" mode, or that the "ON" mode may last shorter than the "OFF" mode.

The thyristor converter may be configured for providing DC output voltage from an AC input voltage having at least 200 VV. The AC input voltage may in particular be a voltage of 200 - 1700 V, such as a voltage of 1000 - 1700 V, in particular a voltage of 1400 - 1700 V. The AC input voltage may in particular be a voltage of 270 - 2300 V, such as a voltage of 1500 - 2200 V.

The AC input voltage may be provided at a frequency f₁ of any of 17, 50, and 60 Hz, or any in the range 60 - 600 Hz, such as 100 - 500 Hz, in particular in the range of 200 - 300 Hz. The DC output voltage may be provided with harmonics that may be caused by the AC input, the frequency of harmonics corresponding in particular to p*f₁, whereas p may correspond to the number of pulses.

According to an aspect, the control unit may be configured to pulsingly activate the switching device according to a pulse width modulation (PWM) scheme. The control unit may be configured to calculate the duty cycle of the pulse in response to the control signal. "PWM", as used herein, may be understood as a control scheme that maintains a given amplitude of its output signal, while adapting its duty cycle and maintaining a fixed frequency. "Duty cycle", as used herein, may be understood as the portion of "ON" time of the PWM output signal in relation to the period of the output signal.

According to an aspect, the control signal may be a control voltage value indicative of a capacitor voltage UC₁ across the capacitor. The control unit may be preferably configured to pulsingly activate the switching device if the control voltage value exceeds a reference voltage value. The reference voltage may be a locally set reference voltage of the capacitor.

According to an aspect, the control unit may be further configured to derive the reference voltage value from a two-state hysteresis control scheme. The control unit may be configured to derive the reference voltage value from a free-swinging two-point controller with variable frequency.

The control unit may be configured such that the same amount of discharges may take place within the three-phase bridge on 6*f₁ charges per second (commutations)/s and/or such that U_{c1} may be just above the amplitude value of U_{syn} after the discharge. The control unit may be further configured such that in a worst-case scenario, the discharge time may not exceed 1/(6*f₁) = 100% duty cycle. Thereby the optimum power at the lowest possible thyristor reverse voltage and thus the lowest possible switch-off losses may be achieved.

According to an aspect, the control unit may be preferably configured to determine the control voltage value from the capacitor voltage UC₁ and/or from the thyristor unit input voltage U_{syn}.

According to an aspect, the control unit may be further configured to permanently activate the switching device for a defined time period if the control voltage exceeds a voltage threshold value. Permanently activating the switching device may beneficially provide an over-voltage protection. The over-voltage protection may present an automatic safety automatism in case one or more of the described control mechanism fail. The over-voltage protection may ensure that no structural damage occurs on components of the thyristor converter.

According to an aspect, the control signal may be obtained from the capacitor voltage UC₁ and/or operation parameters of the thyristor converter. Operation parameters of the thyristor converter may include any or any combination of: the thyristor converter operation point, firing angle of the thyristors, current flow during commutation (di/dt), charging quantity per switching pulse (Q), thyristor type, thyristor junction temperature, and thyristor turn-off behavior. The operation parameters may in particular account for worst-case scenarios such as any or any combination of maximum input voltage U_{syn} to the thyristor unit, maximum current flow (di/dt) during commutation, charging quantity per switching pulse (Q), worst case firing angle at rated current, and maximum thyristor junction temperature.

The control unit may be configured to capture the input voltage U_{syn} at the input of the thyristor unit. In particular, peak values, average values, and/or root square root (rms) values of U_{syn} may be captured. The control unit may be configured to determine the capacitor voltage U_{C1} from the input voltage U_{syn}. The capacitor voltage U_{C1} may be estimated from U_{syn} in addition to capturing U_{c1} or alternatively to capturing U_{c1}. U_{C1} peak values may be derived from U_{syn} peak values. When capturing U_{syn}, the switching cycle of the switching device may be synchronized to the firing cycle of the transistors.

According to an aspect, the control unit may be further configured to pulsingly activate the switching device according to a closed loop control. The control unit may receive one or more operation parameters as feedback to the closed loop control.

The capacitor, according to embodiments described herein, may be understood as a capacitor of or above 20 µF, in particular in the range of 30 to 60 µF, such as in the range of 40 to 50 µF. The capacitor may be configured to withstand U_{c1} voltage levels up to 5kV, in particular in the range of 1 - 4 kV, such as 2 - 3 kV. The resistor, according to embodiments described herein, may be understood as a controllable resistor of or above 100 Ω, in particular in the range of 200 to 2000 Ω, such as in the range of 800 to 1500 Ω.

According to an aspect, the control unit may further comprise an optical sender configured to issue an optical activating signal to pulsingly activate the switching device, and the switching device may comprise an optical receiver configured to receive the optical activating signal issued from the control unit. The optical sender and the optical receiver may form an optical control link. The optical control link may be configured to transmit a serial protocol and/or bitwise control signals. The optical control link may galvanically isolate the control unit from the switching device.

The summing snubber and/or the control unit may be self-powered. The switching device and/or the control unit may be powered by the capacitor voltage UC₁.

Further in series to the resistor, a current flow indicator may be implemented. The current flow indicator may measure the current flow through the resistor. The current flow indicator may be provided with an optical sender configured to issue a current flow indicator signal. The control unit may be provided with an optical receiver configured to receive the current flow indicator signal. The optical sender of the current flow indicator and the optical receiver of the control unit may form an optical feedback link. The current feedback may be provided to the control unit for each duty cycle. The current feedback may be fed into the closed-control loop scheme of the control unit.

According to an aspect, the switching device may be a semiconductor device, in particular an IGBT switch.

According to an aspect, the thyristor converter may further include a plurality of auctioneer diodes and an inverter. The plurality of auctioneer diodes may be coupled between an output of the summing snubber unit and an input of the inverter. The output of the inverter may be coupled to auxiliary equipment. The inverter may operate in the range of 135 - 2300 V.

"Auctioneer diodes" as used herein may also refer to high value gates or decoupling diodes that may collect the snubber losses of individual and parallel connected thyristors and/or rectifiers. The output of the inverter may be coupled to a local low-voltage system of the thyristor converter. The low-voltage system may be used for suppling auxiliary equipment, such as cooling fans. Auxiliary equipment may operate in the low-voltage domain, for instance a voltage may be a voltage above 135 V, such as a voltage between 135 V - 2300V

Beneficially, the auctioneer diodes may enable energy recovery of the thyristor converter or of two or more thyristor converters being coupled in parallel. The control unit may permanently or temporally de-active the switching device for energy recovery. The switching device may be permanently open. Energy that may otherwise be lost in the resistor of the summing snubber may be recovered. In case the energy recovery is dispensed or for other reasons, the control unit may activate the switching device as described above.

According to an aspect, the thyristor converter may further include a housing, wherein the resistor is physically placed outside the housing. Placing the resistor in an outside environment may have a cooling effect on the resistor.

According to an aspect, the thyristor unit may include a DC output. The diode bridge may be coupled to the DC output of the thyristor unit and the capacitor may be coupled via the diode bridge to the DC output of the thyristor unit. The resistor may be coupled to the capacitor in parallel and the switching device may be coupled to the resistor in series.

When coupled to the DC output of the thyristor unit, the control unit may be configured to control the switching device based on the peak voltage of the output voltage U_{f}. The control unit may be configured to determine the peak voltage output voltage U_{f} from the input voltage U_{syn} and the firing angle of the thyristors.

When coupled to the output of the thyristor unit, the diode-bridge may comprise four diodes. Two of the four diodes may be connected in series. Coupling the summing snubber to the output of the thyristor unit may beneficially reduce an output voltage peak of the thyristor converter. The snubber capacitor may charge to lower voltages which may lead to significantly lower losses in the resistor of the summing snubber.

Coupling the summing snubber to the output of the thyristor unit may be particularly suitable for excitations systems. In excitation systems, the thyristor converters may operate at a much lower output voltage compared to the input voltage in order to provide boost capacity. In normal operation mode, the output voltage U_{f} may be in the range of 2 -60 % of the input voltage U_{syn}. In particular for excitation systems with a relatively short boost period (typically tens of seconds), the dimensioning of the resistor may beneficially be (further) reduced. The magnitude of the output resistor may be in the range of 20 - 100% of the input resistor. Reducing the dimensioning of the resistor may also reduce costs. Beneficially, the generator field winding insulation of a load coupled to the output of the thyristor converter may be protected from spike magnitudes of the output voltages of the thyristor converter.

A thyristor converter may include two summing snubbers and the respective diode bridges being coupled to both, the AC input voltage unit of the thyristor unit and the DC voltage output of the thyristor unit.

According to an aspect, a system is described. The system includes at least two thyristor converters. Each of the thyristor converter corresponds to any of the embodiments of the thyristor converter described above. The at least two thyristor converters may be connected in parallel. Alternatively, the system may comprise one thyristor converter. Alternatively, the system may comprise n thyristor converters.

In embodiments, at least one of the at least two thyristor converters may be operated in an OFF-mode. The OFF-mode may correspond to a standby or missing mode. The system may provide redundancy of thyristor converters. Redundancy of thyristor converter may be provided to ensure continuous operation in the case of failure, for instance of missing cooling.

In embodiments, the n thyristor converters may be operated in parallel to share the load current. In case one or more of the n parallel converters may fail, the remaining converter may share the load current (n-x redundancy). In case all of the converter may fail completely, the control unit may be configured to deactivate the switching device such that the snubber resistor may be switched off. As the current load is shared in the n-x redundancy, the resistor may be designed in a too-low impedance for normal operation and a duty cycle below 100 % may be particularly worthwhile in this case.

According to an aspect, a method for controlling a thyristor converter for transferring power from an AC input to a DC output is described. The thyristor converter corresponds to any of the embodiments of the thyristor converter described above. The method includes the steps of receiving a control signal, and pulsingly activating the switching device in response to the control signal.

The method may further include any or any combination of the following steps:
- calculating the duty cycle of the pulse in response to the control signal; pulsingly activating the switching device according to a pulse width modulation scheme;
- pulsingly activating the switching device if the control voltage value exceeds a reference voltage value, wherein the control signal is a control voltage value indicative of a capacitor voltage U_{C1} across the capacitor;
- deriving the reference voltage value from a two-state hysteresis control scheme;
- determining the control voltage value from the capacitor voltage U_{C1} and/or from a thyristor unit input voltage;
- capturing the input voltage U_{syn}; determining the capacitor voltage U_{C1} from the input voltage U_{syn};
- permanently activating the switching device for a defined time period if the control voltage exceeds a voltage threshold value;
- obtaining the control signal from the capacitor voltage U_{C1} and/or operation parameters of the thyristor converter;
- pulsingly activating the switching device according to a closed loop control;
- issuing an optical activating signal to pulsingly activate the switching device.

Features described with respect to embodiments of the thyristor converter may equally be realized by the method for controlling the thyristor converter, and vice versa.

Beneficially, the summing snubber and/or control unit may be adapted or adaptive to a variety of thyristor types and/or input voltages to the thyristor converter. The embodiments described herein may provide for a selective application of capacitor discharge due to the redundancy scheme of the converter topology. In addition or alternatively, the embodiments described herein may provide for an adaptive capacitor discharge which may take into account, for instance, the input voltage U_{syn}, the converter operation point (firing angle and current flow during commutation), and the type and junction temperature of the thyristors. In addition or alternatively, the embodiments described herein may provide for controlling energy generation of the resistor, and IGBT control.

Generally, the embodiments discussed above may enable to reduce discharging losses of the resistor, while limiting voltage spikes caused by switching events. Beneficially, the impedance of the summing snubber may be reduced such that more of a thyristor reverse charge may be transferred to the capacity, thereby reducing off-losses in the thyristor and increasing rated output current of the converter.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic view of a thyristor converter according to embodiments;
- Fig. 2: is a schematic view of aspects of a summing snubber of a thyristor converter according to embodiments;
- Fig. 3: is a schematic view of aspects of a summing snubber of a thyristor converter according to embodiments;
- Fig. 4: is a schematic view of a thyristor converter according to embodiments;
- Fig. 5: is a schematic view of a system comprising at least two thyristors converters according to embodiments; and
- Fig. 6: is a schematic view of a method according to embodiments.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

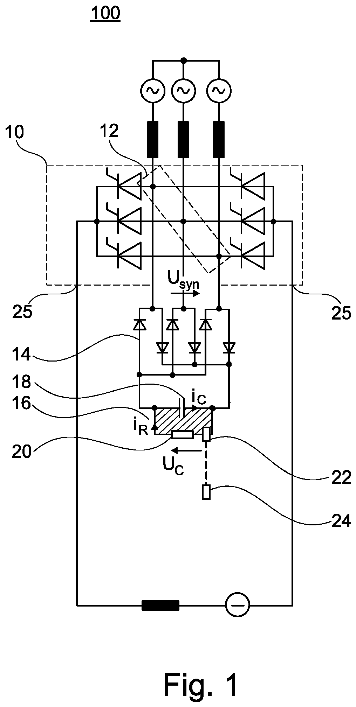

Referring now to Fig. 1, a thyristor converter 100 for transferring power from an AC voltage input to a DC voltage output according to embodiments is described. The thyristor converter 100 includes a thyristor unit 10 having a six-pulse rectifier with thyristors. The thyristor unit 10 further includes a diode bridge 14 being coupled to the input 12 of the thyristor unit 10 and a summing snubber unit 16. The summing snubber unit 16 has a capacitor 18 being coupled via the diode bridge 14 to the input of the thyristor unit 10, a resistor 20 being coupled to the capacitor 18 in parallel, and a switching device 22 being coupled to the resistor in series. The thyristor converter also has a control unit 24. The control unit 24 is configured to pulsingly activate the switching device 22 in response to a control signal.

The input 12 of the thyristor unit 10 of the thyristor converter 100 may couple the AC voltage input to the rectifier, as well as to the input of the diodebride 14. Although a six-pulse rectifier is depicted, the number of pulses may deviate therefrom in embodiments. A voltage U_{sync} may be referred to as the voltage at the input of the thyristor unit. The output 25 of the thyristor unit 10 may provide a DC voltage, for instance to a load. Although Fig. 1 depicts a DC motor with an anchor inductance as a load, the invention is not limited thereto.

The diode bridge 14 may provide a DC voltage to the summing snubber 16. The voltage across the capacitor 20 of the summing snubber 16 may be referred to as U_{c1}. The summing snubber may be provided with additional series damping resistors and/or diodes (not shown). The switching device 22 being coupled in series to the resistor 20, as well as the control unit 24 will be explained with greater detail below.

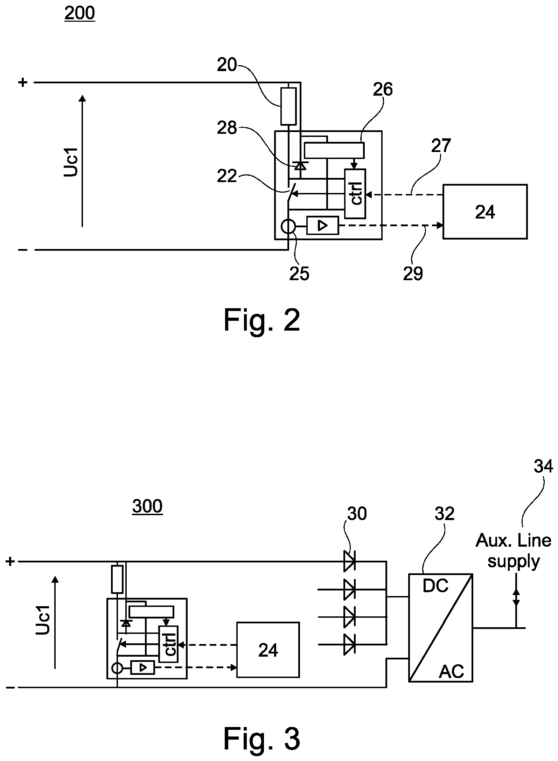

Referring now to Fig. 2, aspects of the thyristor converter 100 are described that relate to the control of the summing snubber 16. In particular, the control unit may issue a control signal 27 in order to pulsingly activate the switching device 22. The switching device 22 is coupled in series with the resistor 20. Also coupled in series thereto is a current flow indicator 25. The current flow indicator 25 may capture a current flow through the series link of the resistor and provide a current flow signal 29 as feedback to the control unit 24. A freewheeling diode 28 may be connected in parallel to the resistor 20, as the resistor 20 may not be completely induction-free.

Transmission of the control signal and/or current flow signal 29 may be realized by an optical link. The optical link may provide for galvanic isolation between the summing snubber and the control unit 24. Alternatively, the control signal 27 and/or current flow signal 29 may be communicated from and/or to the control unit by a wired connection (not shown).

Based on the feedback of the current flow and/or other operation parameters, the control unit 24 may determine and issue a control signal 27. The control unit 24 may determine the control signal in a closed-loop control scheme for the switching device 22. The control unit 24 may also include a memory unit for storing reference voltage values. The control unit 24 may be configured to perform a PWM control scheme and/or a two-state hysteresis control.

The summing snubber and/or the control unit may be self-powered. The switching device 22 and/or the control unit 24 may be powered by the capacitor voltage UC₁.

In embodiments, module 26 may provide a control voltage (not shown) that may be transmitted to the control unit 24. The control voltage may be based on U_{c1} and/or U_{syn}. U_{c1} may be locally measured.

In embodiments, the control unit 24 may permanently activate the switching device 22 for a defined time period if the control voltage exceeds a voltage threshold value. An overvolt protection of the capacitor and/or other elements of the thyristor converter may be realized thereby.

Referring now to Fig. 3, aspects 300 of the thyristor converter 100 are described that relate to energy recovery of the summing snubber 16. In particular, the thyristor converter may include a plurality of diodes 30 and an inverter 32 that may be coupled to the output of the summing snubber. The plurality of diodes 30 may be realized by auctioneer diodes, high value gates or decoupling diodes. Although four diodes are depicted, the invention is not limited to that number. Rather, any suitable number of diodes is within the scope of the invention. The output of the inverter 32 may provide voltage to an auxiliary supply line 34. The auxiliary supply line 34 may be connected to auxiliary equipment of the thyristor converter, such as fans (not shown). The voltage provided by the inverter 32 may be a low-voltage. When used for energy recovery, the control unit 24 may deactivate the switching device of the summing snubber.

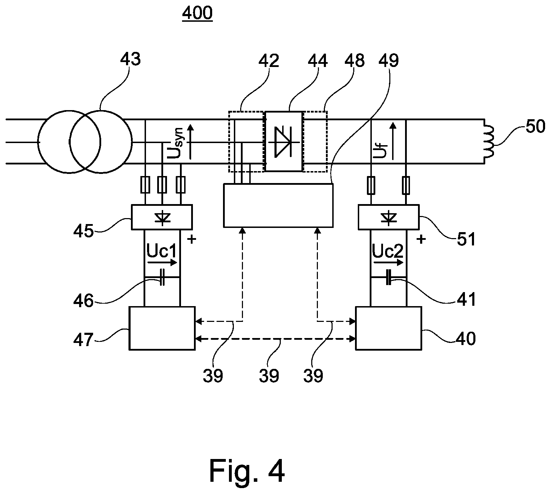

Referring now to Fig. 4, a thyristor converter 400 is described. The thyristor converter 500 may include two summing snubbers. The thyristor converter may be connected to a transformer 43 that may provide AC voltage to the thyristor converter. The thyristor converter may include a thyristor unit 44. The thyristor unit may include an input 42 and an output 48. The input 42 of the transistor unit 44 may be supplied with AC voltage from the transformer 43 and may be connected to a diode bridge 45. The input voltage at the input 42 of the thyristor unit 44 may be referred to as U_{syn}. The diode bridge 45 may have six diodes (not shown). The diode bridge 45 may couple an input summing snubber to the input 42 of the thyristor unit 44. The input summing snubber may be formed of an input capacitor 46 with a capacitor voltage U_{c1} and input unit 47. Input unit 47 may include an input resistor (not shown) coupled in parallel to the input capacitor 46 and a switching device coupled in series to the resistor (not shown).

The output 48 of the thyristor unit 44 may supply DC output voltage and may be connected to a diode bridge 51. The DC output voltage may be referred to as U_{f}. The diode bridge 51 may have four diodes (not shown). The diode bride 51 may couple an output summing snubber to the output 48 of the thyristor unit 44. The output summing snubber may be formed of an output capacitor 41 with a capacitor voltage U_{c2} and output unit 40. Output unit 40 may include an output resistor (not shown) coupled in parallel to the output capacitor 41 and a switching device coupled in series to the output resistor (not shown). The output 48 of the transistor unit 44 may be coupled to an inductive load 50 and may provide DC voltage to the inductive load 50.

The input unit 47 and/or the output unit 40 may include elements to capture the capacitor voltage U_{c1} and/or output capacitor voltage U_{c2}, respectively.

The thyristor unit 44 may include a two-pulse rectifier with thyristors (not shown) A two-pulse rectifier may have two or four branches. The thyristor converter 400 may also include a middle unit 49. The middle unit 49 may have a control unit. The middle unit 49 may capture the input voltage U_{syn} and/or the output voltage U_{f} of the thyristor unit 44 and/or may provide the input voltage U_{syn} and/or output voltage U_{f} to the input unit 47 and/or output unit 40.

Input unit 47 and/or input unit 40 may also include a control unit (not shown). Input unit 47 and/or middle unit 49 and/or input unit 40 may be connected by communication links 39. The communication link 39 may be optical communication links. The communication links 39 may serve to transmit and/or receive, for instance, captured parameters, such as input capacitor 46 voltage U_{C1}, output capacitor 41 voltage U_{f}, input voltage U_{syn}, or any of the operation parameters described above.

The communication links 39 may serve to transmit a control signal to the input unit 47 and/or output unit 40. The middle unit 49 may issue the control signal. The input unit 47 and/or output unit 40 may, in response to the control signal, activate the switching device within their respective unit.

Although thyristor converter 400 is depicted to have an input summing snubber and an output summing snubber, embodiments that include only an input summing snubber or an output summing snubber are within the scope of the invention.

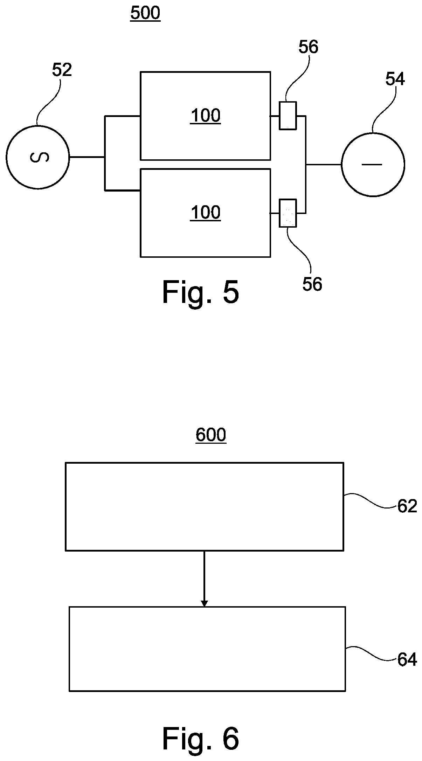

Now referring to Fig. 5, a system 500 is described. The system 500 may include at least two thyristor converters 100 being connected in parallel. Although two thyristor converters are depicted, the invention is not limited thereto. Also one thyristor converter or, any other suitable number of thyristor converters 100 may be connected to provide redundancy within the system 500. Thy thyristor converters 100 may correspond to any of the embodiments of the thyristor converter described above. As schematically illustrated, the input of the thyristor converters 100 may be connected to an AC voltage input. The output of the thyristor converters may provide DC voltage and/or may be connected to a load (not shown). The system 500 may further provide for switches 56 that may be activated to selectively connect one of the thyristor converters 100 to the DC output and/or load. The switches 56 may symbolize controlling of the firing impulse of the thyristors.

Referring now to Fig. 6, a method 600 for controlling a thyristor converter for transferring power from an AC voltage input to a DC voltage output according to any of the embodiments of a thyristor converter described above is described. The method 600 includes the steps of receiving 62 a control signal, and pulsingly activating 64 the switching device in response to the control signal.

## Claims

1. A thyristor converter (100) for transferring power from an alternating current, AC, voltage input to a direct current, DC, voltage output, comprising:
- a thyristor unit (10) comprising a rectifier with at least two pulses, in particular with six pulses, with thyristors, the thyristor unit comprising an input (12);
- a diode bridge (14) being coupled to the input of the thyristor unit;
- a summing snubber unit (16), the summing snubber unit comprising:
- a capacitor (18) being coupled via the diode bridge to the input of the thyristor unit;
- a resistor (20) being coupled to the capacitor in parallel;
- a switching device (22) being coupled to the resistor in series;
- a control unit (24), the control unit being configured to pulsingly activate the switching device in response to a control signal (27).

2. The thyristor converter according to the preceding claim, wherein the control unit is configured to pulsingly activate the switching device according to a pulse width modulation scheme, wherein the control unit is configured to calculate the duty cycle of the pulse in response to the control signal.

3. The thyristor converter according to any one of the preceding claims, wherein the control signal is a control voltage value indicative of a capacitor voltage U_{C1} across the capacitor,
wherein the control unit is preferably configured to pulsingly activate the switching device if the control voltage value exceeds a reference voltage value.

4. The thyristor converter according to claim 3, wherein the control unit is further configured to derive the reference voltage value from a two-state hysteresis control scheme.

5. The thyristor converter according to any one of the claims 3 and 4, wherein the control unit is preferably configured to determine the control voltage value from the capacitor voltage U_{C1} and/or from a thyristor unit input voltage.

6. The converter according to any one of the claims 3 to 5, wherein the control unit is further configured to permanently activate the switching device for a defined time period if the control voltage exceeds a voltage threshold value.

7. The thyristor converter according to any one of the preceding claims, wherein the control signal is obtained from the capacitor voltage U_{C1} and/or operation parameters of the thyristor converter.

8. The thyristor converter according to any one of the preceding claims, wherein the control unit is further configured to pulsingly activate the switching device according to a closed loop control.

9. The thyristor converter according to any one of the preceding claims, wherein the control unit further comprises an optical sender configured to issue an optical activating signal to pulsingly activate the switching device, and the switching device comprises an optical receiver configured to receive the optical activating signal issued from the control unit, wherein the optical sender and the optical receiver from an optical control link.

10. The thyristor converter according to any one of the preceding claims, wherein the switching device is a semiconductor device, in particular an IGBT switch.

11. The thyristor converter according to any one of the preceding claims, further comprising a plurality of auctioneer diodes and an inverter, the plurality of auctioneer diodes being coupled between an output of the summing snubber unit and an input of the inverter, wherein an output of the inverter is coupled to auxiliary equipment.

12. The thyristor converter according to any one of the preceding claims, wherein the thyristor converter further comprises a housing, wherein the resistor is physically placed outside the housing.

13. The thyristor converter according to any one of claims 1 - 12, wherein the thyristor unit comprises a DC output, the diode bridge being coupled to the DC output of the thyristor unit and the capacitor being coupled via the diode bridge to the DC output of the thyristor unit, the resistor being coupled to the capacitor in parallel and the switching device being coupled to the resistor in series.

14. A system (500) comprising at least two thyristor converters according to any one of the claims 1 - 13.

15. A method (600) for controlling a thyristor converter for transferring power from an AC voltage input to a DC voltage output according to any one of claims 1 - 13, the method comprising:
- receiving (62) a control signal;
- pulsingly activating (64) the switching device in response to the control signal.
